# EUROPEAN PATENT APPLICATION

(11) **EP 4 746 098 A1**
(43) Date of publication of application: **20.05.2026**
(21) Application number: 24841879.0
(22) Date of filing: 10.01.2024
(51) Int. Cl.: H01M 10/0525, H01M 10/058, H01M 4/36, H01M 10/42, H01M 10/0569, H01M 10/0567

(54) **LITHIUM ION BATTERY AND ELECTRIC DEVICE COMPRISING SAME**

(30) Priority: 19.07.2023 CN 202310882920
(71) Applicant: Contemporary Amperex Technology Co., Limited, Ningde, Fujian 352100 (CN)
(72) Inventor: AI, Qing, Ningde, Fujian 352100 (CN)
(74) Representative: Ziebig Hengelhaupt Intellectual Property Attorneys Patentanwaltskanzlei PartGmbB
(86) International application number: PCT/CN2024/071605
(87) International publication number: WO 2025/015872

(57) **Abstract**

A lithium-ion battery (5) and an electric apparatus including the same are disclosed. The lithium-ion battery (5) includes a positive electrode plate and an electrolyte; where the positive electrode plate includes a positive electrode current collector and a positive electrode active material layer provided on at least one surface of the positive electrode current collector, the positive electrode active material layer including a positive electrode lithium supplementation agent; the electrolyte includes a non-aqueous solvent and an additive; and the additive includes a sulfur-containing compound, and the non-aqueous solvent includes an ether compound.

## Description

### CROSS-REFERENCE TO RELATED APPLICATIONS

This application claims priority to Chinese Patent Application No. 202310882920.X, filed on July 19, 2023 and entitled "LITHIUM-ION BATTERY AND ELECTRIC APPARATUS INCLUDING SAME", the entire contents of which are incorporated herein by reference.

### TECHNICAL FIELD

This application relates to the technical field of lithium-ion batteries, and in particular to a lithium-ion battery and an electric apparatus including the same.

### BACKGROUND

In recent years, the application scope of secondary batteries represented by lithium-ion batteries has become increasingly widespread. Secondary batteries are widely used in energy storage power systems such as hydroelectric, thermal, wind and solar power stations, as well as in many fields including power tools, electric bicycles, electric motorcycles, electric vehicles, military equipment, and aerospace. Due to the tremendous development of secondary batteries, higher requirements have also been placed on their performance.

During the first charge-discharge process of a secondary battery, a solid electrolyte interphase (SEI film) is formed on the surface of the negative electrode, which consumes active ions and leads to capacity decline. Although this can be improved by lithium supplementation at the electrode (for example, by adding a small amount of high gram-capacity material as a lithium supplementation agent during the positive electrode slurry mixing process), the improvement effect on the initial gram capacity utilization is limited and difficult to meet the needs of practical applications.

### SUMMARY

The purpose of this application is to provide a lithium-ion battery and an electric apparatus including the same. When a positive electrode lithium supplementation agent is applied, the lithium-ion battery, in cooperation with a corresponding electrolyte system, can have good initial gram capacity, cycling stability, and rate performance.

For this, a first aspect of this application provides a lithium-ion battery including a positive electrode plate and an electrolyte.

The positive electrode plate includes a positive electrode current collector and a positive electrode active material layer provided on at least one surface of the positive electrode current collector, the positive electrode active material layer including a positive electrode lithium supplementation agent.

The electrolyte includes a non-aqueous solvent and an additive; and the non-aqueous solvent includes an ether compound, and the additive includes a sulfur-containing compound.

The electrolyte simultaneously containing a sulfur-containing compound and an ether compound helps to improve the interaction between the electrolyte and the interface of the positive electrode lithium supplementation agent material, thereby improving the ion mobility at the interface of the positive electrode lithium supplementation agent material, reducing the consumption of active lithium in side reactions, and serving to reduce polarization. This is conducive to overcoming the problem of insufficient initial gram capacity utilization caused by positive electrode polarization, while simultaneously improving cycling stability and rate performance.

In any embodiment, the ether compound includes a chain ether compound.

Compared with cyclic ether compounds, when a chain ether compound is used, it has a stronger chelating ability with cations and can further reduce the viscosity of the electrolyte, thereby facilitating the improvement of ion conductivity.

In any embodiment, the chain ether compound includes at least one of the following group consisting of: ethylene glycol dimethyl ether (DME), ethylene glycol diethyl ether (DEE), diethylene glycol dimethyl ether (DEGDME), triethylene glycol dimethyl ether (TRGDME), tetraethylene glycol dimethyl ether (TEGDME), dipropyl ether, dibutyl ether, and the like.

In any embodiment, in the non-aqueous solvent, a mass percentage of the ether compound is 15% to 30%.

When the mass percentage of the ether compound in the non-aqueous solvent is 15% to 30%, a good solvent system can be provided, so that when the solvent dissolves a relatively high concentration of lithium salt and sulfur-containing compound, the viscosity is not significantly increased, which helps to increase the depolarization effect and expand the electrochemical stability window, and maintain good cycling stability and rate performance.

In any embodiment, in the non-aqueous solvent, the mass percentage of the ether compound is 15% to 25%.

By optimizing the mass percentage of the ether compound in the non-aqueous solvent, the battery performance is further improved.

In any embodiment, the sulfur-containing compound includes a sulfonate compound.

In any embodiment, the sulfonate compound includes at least one of the following group consisting of: 1,3-propane sultone, 1,3-propene sultone, 1,4-butane sultone, methylene methane disulfonate, and the like.

Compared with the use of other sulfur-containing compounds such as sulfate compounds, the use of sulfonate compounds can promote stable formation of the SEI film, reduce gas production during formation, and have low corrosiveness, thereby being more conducive to interface stability and safety.

In any embodiment, in the electrolyte, a mass percentage of the sulfur-containing compound is 0.5% to 4%.

When the mass percentage of the sulfur-containing compound in the electrolyte is 0.5% to 4%, it is conducive to improving liquid-phase conduction efficiency and ion mobility at the interface of the positive electrode material, thereby improving interface stability.

In any embodiment, in the electrolyte, the mass percentage of the sulfur-containing compound is 1.5% to 3.5%.

By optimizing the mass percentage of the sulfur-containing compound in the electrolyte, the battery performance is further improved.

In any embodiment, the electrolyte further includes a lithium salt dissolved in the non-aqueous solvent; and in the electrolyte, a concentration of the lithium salt is 0.5 mol/L to 1.6 mol/L.

When the lithium salt concentration is 0.5 mol/L to 1.6 mol/L, it is beneficial for the electrolyte to maintain good ion conductivity, thereby facilitating the improvement of ion mobility at the interface of the positive electrode lithium supplementation agent material and optimizing the depolarization effect.

In any embodiment, the mass percentage of the sulfur-containing compound in the electrolyte is 1.5% to 3.5%; the mass percentage of the ether compound in the non-aqueous solvent is 15% to 25%; and the concentration of the lithium salt in the electrolyte is 1 mol/L to 1.4 mol/L.

When the use amounts of the lithium salt, sulfur-containing compound, and ether compound simultaneously satisfy the above ranges, there is a further significant improvement in battery performance.

In any embodiment, the positive electrode lithium supplementation agent includes at least one compound conforming to the following formula: LiₓM_{y}O_{z}, where M is one or more elements selected from Fe, Ni, Mn, Cu, Zn, Co, Cr, Zr, Ni, Sb, Ti, V, Mo, and Sn, 1≤x≤8, 0<y, and 0<z<13.

In any embodiment, the positive electrode lithium supplementation agent includes at least one of the following group consisting of: Li₅FeO₄, Li₅Fe₅O₈, Li₆CoO₄, Li₂NiO₂, Li₂O, Li₂O₂, Li₆MnO₄, Li₆ZnO₄, Li₂CuO₂, Li₂CoO₂, Li₂MnO₂, Li₂C₂O₄, Li₂Ni_{0.5}Mn_{1.5}O₄, and Li(Ni_{0.8}Co_{0.1}Mn_{0.1})_{1.3}O₂.

A second aspect of this application provides an electric apparatus including the lithium-ion battery described in the first aspect of this application.

As compared with the prior art, the technical solution of this application has the following beneficial effects:

This application applies an electrolyte simultaneously containing a sulfur-containing compound and an ether compound in a positive electrode lithium supplementation system where electrode polarization exists, thereby improving liquid-phase conduction efficiency and ion mobility at the interface of the positive electrode material, achieving a polarization reduction effect. This is conducive to overcoming the problem of insufficient initial gram capacity utilization caused by positive electrode polarization, and can improve the cycling stability and rate performance of the battery.

### BRIEF DESCRIPTION OF THE DRAWINGS

Various other advantages and benefits will become apparent to those of ordinary skill in the art by reading the detailed description of the preferred embodiments below. The drawings are for the purpose of illustrating the preferred embodiments only and are not to be considered as limiting this application. Moreover, throughout the drawings, the same reference symbols denote the same components. In the drawings:
FIG. 1 is a schematic diagram of a secondary battery according to an embodiment of this application;
FIG. 2 is an exploded view of the secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electric apparatus using a secondary battery as a power source according to an embodiment of this application.

Description of reference signs:
1 battery pack; 2 upper box body; 3 lower box body; 4 battery module; 5 lithium-ion battery; 51 housing; 52 electrode assembly; and 53 cover plate.

### DESCRIPTION OF EMBODIMENTS

Exemplary embodiments of the present disclosure will be described in more detail below. It should be understood that the present disclosure may be implemented in various forms and should not be limited by the embodiments set forth herein. Rather, these embodiments are provided so that the present disclosure will be thorough and complete, and the scope of the present disclosure will be fully conveyed to those skilled in the art.

The "range" disclosed in this application is defined in the form of a lower limit and an upper limit, a given range is defined by selecting a lower limit and an upper limit, and the selected lower limit and upper limit define the boundaries of the particular range. Ranges defined in this manner may or may not include endpoints and may be arbitrarily combined, meaning that any lower limit may be combined with any upper limit to form a range. For example, if ranges of 60-120 and 80-110 are listed for a particular parameter, it is understood that ranges of 60-110 and 80-120 are also contemplated. In addition, if the minimum range values listed are 1 and 2, and the maximum range values listed are 3, 4, and 5, the following ranges are all contemplated: 1-3, 1-4, 1-5, 2-3, 2-4, and 2-5. In this application, unless otherwise stated, the numerical range "a-b" represents an abbreviated representation of any real number combination between a and b, where a and b are both real numbers. For example, the numerical range "0-5" indicates that all real numbers between "0-5" inclusive have been listed herein, and "0-5" is merely an abbreviated representation of these numerical combinations. In addition, when a parameter is expressed as an integer equal to or greater than 2, it is equivalent to disclosing that the parameter is, for example, the integer 2, 3, 4, 5, 6, 7, 8, 9, 10, 11, or 12.

Unless otherwise specifically indicated, all embodiments and optional embodiments of this application may be combined with each other to form new technical solutions.

Unless otherwise specifically indicated, all technical features and optional technical features of this application may be combined with each other to form new technical solutions.

Unless otherwise specifically indicated, all steps of this application may be performed sequentially or randomly, preferably sequentially. For example, a method including steps (a) and (b) indicates that the method may include steps (a) and (b) performed sequentially, or may include steps (b) and (a) performed sequentially. For example, reference to the method possibly further including step (c) indicates that step (c) may be added to the method in any order, for example, the method may include steps (a), (b), and (c), or may include steps (a), (c), and (b), or may include steps (c), (a), and (b), or the like.

Unless otherwise specifically indicated, the terms "include" and "comprise" mentioned in this application indicate open-ended or closed-ended. For example, "include" and "comprise" may mean that other components not listed may also be included or contained, or only the listed components may be included or contained.

To alleviate the problem of capacity decline caused by consumption of active ions during the first charge-discharge process of a secondary battery, electrode lithium supplementation agents have been applied to a certain extent. For example, a small amount of high gram-capacity material may be added as a lithium supplementation agent during the positive electrode slurry mixing process to alleviate this. However, when an electrode lithium supplementation agent is applied, the improvement effect on initial gram capacity utilization is limited, making it difficult to meet the needs of practical applications and limiting the application of secondary batteries.

In this application, it has been found that although the application of a positive electrode lithium supplementation agent can improve initial gram capacity to a certain extent, the positive electrode plate after lithium supplementation is prone to polarization, resulting in an unsatisfactory improvement effect on initial gram capacity. Therefore, this application significantly improves liquid-phase conduction efficiency and ion mobility at the interface of the positive electrode lithium supplementation agent material by simultaneously applying a sulfur-containing compound and an ether compound in the electrolyte of the lithium-ion battery, thereby achieving a depolarization effect. This effectively overcomes the problem of insufficient initial gram capacity utilization caused by positive electrode polarization, while simultaneously improving the cycling stability and rate performance of the battery.

The technical solutions described in the embodiments of this application are applicable to lithium-ion batteries, battery modules using lithium-ion batteries, battery packs using lithium-ion batteries or battery modules, and electric apparatuses using at least one of lithium-ion batteries, battery modules, and battery packs.

### Lithium-ion battery

In some embodiments, a lithium-ion battery is provided including a positive electrode plate, a negative electrode plate, a separator, and an electrolyte.

The positive electrode plate includes a positive electrode current collector and a positive electrode active material layer provided on at least one surface of the positive electrode current collector, the positive electrode active material layer including a positive electrode lithium supplementation agent.

The electrolyte includes a non-aqueous solvent and an additive; and the additive includes a sulfur-containing compound, and the non-aqueous solvent includes an ether compound.

The electrolyte simultaneously containing a sulfur-containing compound and an ether compound improves the ion conductivity of the electrolyte, and helps to improve the interaction between the electrolyte and the interface of the positive electrode material, thereby improving ion mobility at the interface of the positive electrode material, reducing the consumption of active lithium in side reactions, and serving to reduce polarization. This is conducive to overcoming the problem of insufficient initial gram capacity utilization caused by positive electrode polarization, while simultaneously improving cycling stability and rate performance of the battery.

In some embodiments, the ether compound includes a chain ether compound.

Compared with cyclic ether compounds, when a chain ether compound is used, it has a stronger chelating ability with cations and can further reduce the viscosity of the electrolyte, thereby facilitating the improvement of lithium ion conductivity.

In some embodiments, the chain ether compound includes at least one of the following group consisting of: ethylene glycol dimethyl ether (DME), ethylene glycol diethyl ether (DEE), diethylene glycol dimethyl ether (DEGDME), triethylene glycol dimethyl ether (TRGDME), tetraethylene glycol dimethyl ether (TEGDME), dipropyl ether, dibutyl ether, and the like.

In some embodiments, in the non-aqueous solvent, a mass percentage of the ether compound is 15% to 30%; for example, it may be approximately 15%, 16%, 17%, 18%, 19%, 20%, 21%, 22%, 23%, 24%, 25%, 26%, 27%, 28%, 29%, or 30%.

When the mass percentage of the ether compound in the non-aqueous solvent is 15% to 30%, a good solvent system can be provided, so that when the solvent dissolves a relatively high concentration of lithium salt and sulfur-containing compound, the viscosity is not significantly increased, which helps to increase the depolarization effect and expand the electrochemical stability window, and maintain good cycling stability and rate performance.

In some embodiments, in the non-aqueous solvent, the mass percentage of the ether compound is 15% to 25%.

By optimizing the mass percentage of the ether compound in the non-aqueous solvent, the battery performance is further improved.

In some embodiments, the sulfur-containing compound includes a sulfonate compound.

In some embodiments, the sulfonate compound includes at least one of the following group consisting of: 1,3-propane sultone, 1,3-propene sultone, 1,4-butane sultone, methylene methane disulfonate, fluorinated sulfonates, and cyclic methylene disulfonates.

Compared with the use of other sulfur-containing compounds such as sulfate compounds, the use of sulfonate compounds can promote stable formation of the SEI film, reduce gas production during formation, and have low corrosiveness, thereby being more conducive to electrochemical stability and high safety.

In some embodiments, in the electrolyte, a mass percentage of the sulfur-containing compound is 0.5% to 4%; for example, it may be approximately 0.5%, 1%, 1.5%, 2%, 2.5%, 3%, 3.5%, or 4%.

When the mass percentage of the sulfur-containing compound in the electrolyte is 0.5% to 4%, it is conducive to further improving liquid-phase conduction efficiency and ion mobility at the interface of the positive electrode material, thereby improving interface stability. If the mass percentage of the sulfur-containing compound is greater than 4%, interface impedance may increase, thereby deteriorating charge rate and low-temperature performance; if the mass percentage of the sulfur-containing compound is less than 0.5%, the improvement effect on the ion conductance of the electrolyte and on the ion mobility at the interface of the positive electrode material is small, so the depolarization effect is not obvious, making it difficult to significantly improve the initial gram capacity.

In some embodiments, in the electrolyte, the mass percentage of the sulfur-containing compound is 1.5% to 3.5%.

Optimizing the mass percentage of the sulfur-containing compound in the electrolyte helps to further improve the battery performance.

In some embodiments, the electrolyte further includes a lithium salt dissolved in the non-aqueous solvent; and in the electrolyte, a concentration of the lithium salt is 0.5 mol/L to 1.6 mol/L; for example, it may be approximately 0.5 mol/L, 0.6 mol/L, 0.7 mol/L, 0.8 mol/L, 0.9 mol/L, 1 mol/L, 1.1 mol/L, 1.2 mol/L, 1.3 mol/L, 1.4 mol/L, 1.5 mol/L, or 1.6 mol/L.

When the concentration of the lithium salt is 0.5 mol/L to 1.6 mol/L, it is beneficial for the electrolyte to maintain good ion conductivity, thereby facilitating the improvement of ion mobility at the interface of the positive electrode material and further optimizing the depolarization effect. As compared with a concentration less than 1 mol/L and a concentration greater than 1.4 mol/L, when the lithium salt concentration is 1 mol/L to 1.4 mol/L, the improvement effect on depolarization and initial gram capacity is more obvious.

In some embodiments, the mass percentage of the sulfur-containing compound in the electrolyte is 1.5% to 3.5%; the mass percentage of the ether compound in the non-aqueous solvent is 15% to 25%; and the concentration of the lithium salt in the electrolyte is 1 mol/L to 1.4 mol/L.

When the use amounts of the lithium salt, sulfur-containing compound, and ether compound simultaneously satisfy the above ranges, there is a further significant improvement in battery performance.

In some embodiments, the positive electrode lithium supplementation agent includes at least one compound conforming to the following formula: LiₓM_{y}O_{z}, where M is one or more elements selected from Fe, Ni, Mn, Cu, Zn, Co, Cr, Zr, Ni, Sb, Ti, V, Mo, and Sn, 1≤x≤8, 0<y, and 0<z<13.

In some embodiments, the positive electrode lithium supplementation agent includes at least one of the following group consisting of: Li₅FeO₄, Li₅Fe₅O₈, Li₆CoO₄, Li₂NiO₂, Li₂O, Li₂O₂, Li₆MnO₄, Li₆ZnO₄, Li₂CuO₂, Li₂CoO₂, Li₂MnO₂, Li₂C₂O₄, Li₂Ni_{0.5}Mn_{1.5}O₄, Li(Ni_{0.8}Co_{0.1}Mn_{0.1})_{1.3}O₂, or the like. It should be noted that some of the above compounds may themselves also be used as positive electrode active materials, for example Li₂NiO₂, Li₂CuO₂, Li₂CoO₂, Li₂MnO₂, or Li₂Ni_{0.5}Mn_{1.5}O₄. When their mass percentages in the positive electrode active material layer are approximately 10% or less, 9% or less, 8% or less, 7% or less, 6% or less, 5% or less, 4% or less, or 3% or less, they may be regarded as positive electrode lithium supplementation agents rather than positive electrode active materials.

### [Positive electrode plate]

In some embodiments, the positive electrode plate includes a positive electrode current collector and a positive electrode active material layer, the positive electrode active material layer including a positive electrode lithium supplementation agent; the positive electrode current collector has two surfaces opposite in its own thickness direction, and the positive electrode active material layer is provided on either or both of the two opposite surfaces of the positive electrode current collector.

In some embodiments, the positive electrode current collector may be a metal foil or a composite current collector. For example, as a metal foil, aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In some embodiments, the positive electrode active material layer includes a positive electrode active material, and the positive electrode active material may be a positive electrode active material known in the art for lithium-ion batteries. As an example, the positive electrode active material may include at least one of the following materials: lithium-containing phosphates of olivine structure, lithium transition metal oxides, and their respective modified compounds. However, this application is not limited to these materials, and other conventional materials that can be used as positive electrode active materials for batteries may also be used. These positive electrode active materials may be used alone or in combination of two or more. Examples of lithium transition metal oxides may include, but are not limited to, lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}C_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (such as LiNi_{0.85}Co_{0.15}Al_{0.05}O₂), and their modified compounds. Examples of lithium-containing phosphates of olivine structure may include, but are not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

In some embodiments, the positive electrode active material layer may optionally include a binder. For example, the binder may include one or a combination of two or more selected from the following group consisting of: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode active material layer may optionally include a conductive agent. For example, the conductive agent may include one or a combination of two or more selected from the following group consisting of: Super P, acetylene black, carbon black, Ketjen black, carbon dots, carbon nanotubes, graphene, and carbon nanofibers.

In some embodiments, the positive electrode plate may be prepared by the following method: dispersing the above components for preparing the positive electrode active material layer, such as the positive electrode active material, the positive electrode lithium supplementation agent, the conductive agent, the binder, and any other components, in a solvent (such as N-methylpyrrolidone) to form a positive electrode slurry; and applying the positive electrode slurry to a composite current collector, and then performing drying, cold pressing, and other processes to obtain a positive electrode plate.

### [Negative electrode plate]

The negative electrode plate includes a negative electrode current collector and a negative electrode active material layer provided on at least one surface of the negative electrode current collector. As an example, the negative electrode current collector has two surfaces opposite in its own thickness direction, and the negative electrode active material layer is provided on either or both of the two opposite surfaces of the negative electrode current collector.

In some embodiments, the negative electrode current collector may be a metal foil or a composite current collector. For example, as a metal foil, copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In some embodiments, the negative electrode active material layer includes a negative electrode active material, and the negative electrode active material may be a negative electrode active material known in the art for batteries. For example, the negative electrode active material includes one or a combination of two or more selected from the following group consisting of: natural graphite, artificial graphite, mesocarbon microbeads (MCMB), hard carbon, soft carbon, silicon, silicon-carbon composite, Li-Sn alloy, Li-Sn-O alloy, Sn, SnO, SnO₂, TiO₂-Li₄Ti₅O₁₂, Li-Al alloy. However, this application is not limited to these materials, and other conventional materials that can be used as negative electrode active materials for lithium-ion batteries may also be used. These negative electrode active materials may be used alone or in combination of two or more.

In some embodiments, the negative electrode active material layer may optionally include a binder. For example, the binder may include one or a combination of two or more selected from the following group consisting of: styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may optionally include a conductive agent. For example, the conductive agent may include one or a combination of two or more selected from the following group consisting of: Super P, acetylene black, carbon black, Ketjen black, carbon dots, carbon nanotubes, graphene, carbon nanofibers.

In some embodiments, the negative electrode active material layer may optionally include other auxiliaries. For example, other auxiliaries may be a thickener (such as sodium carboxymethyl cellulose (CMC-Na)).

In some embodiments, the negative electrode plate may be prepared by the following method: dispersing the above components for preparing the negative electrode active material layer, such as the negative electrode active material, the conductive agent, the binder, and any other components, in a solvent ( such as deionized water) to form a negative electrode slurry; and applying the negative electrode slurry to a negative electrode current collector, and then performing drying, cold pressing, and other processes to obtain a negative electrode plate.

### [Electrolyte]

In some embodiments, the electrolyte includes a non-aqueous solvent and an additive; the additive includes a sulfur-containing compound, and the non-aqueous solvent includes an ether compound.

In some embodiments, the electrolyte further includes a lithium salt dissolved in the non-aqueous solvent.

In some embodiments, the lithium salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the non-aqueous solvent further includes at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the additive further includes other additives besides the sulfur-containing compound; for example, the other additives may include negative electrode film-forming additives or positive electrode film-forming additives, and may also include additives capable of improving certain performance of the battery, such as additives that improve overcharge performance of the battery or additives that improve high-temperature or low-temperature performance of the battery.

### [Separator]

The separator is provided between the positive electrode plate and the negative electrode plate to provide isolation. This application has no particular restriction on the type of separator, and any well-known porous structure separator with good chemical stability and mechanical stability may be selected. The material of the separator may be selected from one or a combination of two or more of the group consisting of: glass fiber, non-woven fabric, polyethylene, polypropylene, polyvinylidene fluoride. The separator may be a single-layer film or a multi-layer composite film, without particular limitation. When the separator is a multi-layer composite film, the materials of each layer may be the same or different, without particular limitation.

### [Preparation of lithium-ion battery]

The positive electrode plate, the negative electrode plate, and the separator may be made into an electrode assembly by a winding process or a stacking process, and then encapsulated with an outer package and injected with electrolyte to prepare a lithium-ion battery.

The outer package may be a hard shell, such as a hard plastic shell, aluminum shell, or steel shell. The outer package may also be a soft pack, such as a pouch-type soft pack. The material of the soft pack may be plastic, examples of which include polypropylene, polybutylene terephthalate, and polybutylene succinate.

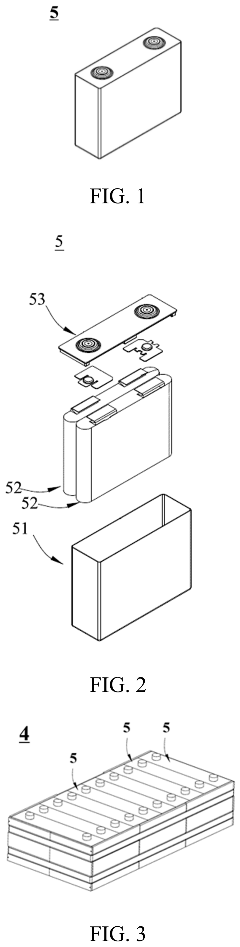

This application has no particular restriction on the shape of the lithium-ion battery, which may be cylindrical, square, or any other shape. For example, FIG. 1 shows a square-structured lithium-ion battery 5 as an example.

In some embodiments, referring to FIG. 2, the outer package may include a housing 51 and a cover plate 53. The housing 51 may include a bottom plate and side plates connected to the bottom plate, with the bottom plate and side plates enclosing an accommodating cavity. The housing 51 has an opening communicating with the accommodating cavity, and the cover plate 53 can cover the opening to close the accommodating cavity. The positive electrode plate, the negative electrode plate, and the separator may form an electrode assembly 52 by a winding process or a stacking process. The electrode assembly 52 is encapsulated in the accommodating cavity. The electrolyte infiltrates into the electrode assembly 52. The number of electrode assemblies 52 contained in the lithium-ion battery 5 may be one or more, and may be selected by those skilled in the art according to specific actual needs.

### Battery module and battery pack

In some embodiments, lithium-ion batteries may be assembled into a battery module, and the battery module may contain one or more lithium-ion batteries, with the specific number selected by those skilled in the art according to the application and capacity of the battery module.

FIG. 3 shows a battery module 4 as an example. Referring to FIG. 3, in the battery module 4, a plurality of lithium-ion batteries 5 may be sequentially arranged along the length direction of the battery module 4. Certainly, they may also be arranged in any other manner. The plurality of lithium-ion batteries 5 may further be fixed by fasteners.

Optionally, the battery module 4 may further include a shell having an accommodating space, and the plurality of lithium-ion batteries 5 are accommodated in the accommodating space.

In some embodiments, lithium-ion batteries may also be assembled into a battery pack.

In some embodiments, the battery modules 4 may also be assembled into a battery pack, and the battery pack may contain one or more battery modules, with the specific number selected by those skilled in the art according to the application and capacity of the battery pack.

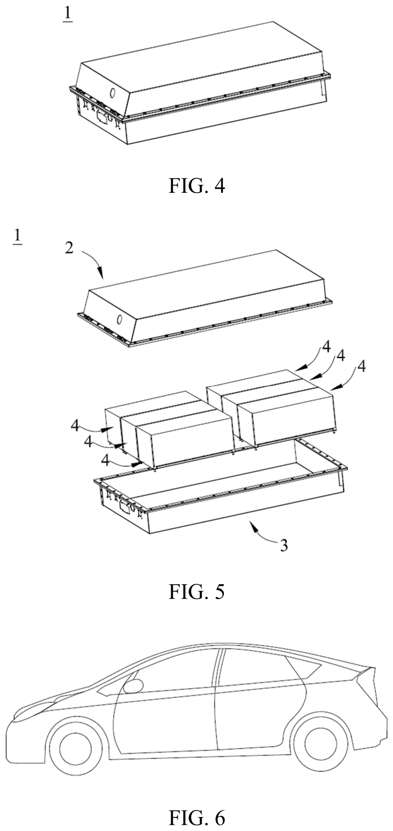

FIG. 4 and FIG. 5 show a battery pack 1 as an example. Referring to FIG. 4 and FIG. 5, the battery pack 1 may include a battery box and a plurality of battery modules 4 provided in the battery box. The battery box includes an upper box body 2 and a lower box body 3, and the upper box body 2 can cover the lower box body 3 and form an enclosed space for accommodating the battery modules 4. The plurality of battery modules 4 may be arranged in the battery box in any manner.

### Electric apparatus

This application further provides an electric apparatus, the electric apparatus including the lithium-ion battery provided in this application. In some embodiments, the electric apparatus includes at least one of the battery module or battery pack provided in this application. The lithium-ion battery, battery module, or battery pack may be used as a power source of the electric apparatus or as an energy storage unit of the electric apparatus. The electric apparatus may include mobile devices (such as mobile phones or laptops), electric vehicles (such as pure electric vehicles, hybrid electric vehicles, plug-in hybrid electric vehicles, electric bicycles, electric scooters, electric golf carts, or electric trucks), electric trains, ships and satellites, energy storage systems, or the like, but is not limited thereto.

For the electric apparatus, the lithium-ion battery, battery module, or battery pack may be selected according to its usage requirements.

FIG. 6 shows an electric apparatus as an example. The electric apparatus is a pure electric vehicle, a hybrid electric vehicle, a plug-in hybrid electric vehicle, or the like. To meet the requirements of the electric apparatus for high power and high energy density of lithium-ion batteries, a battery pack or battery module may be used.

As another example, the apparatus may be a mobile phone, a tablet computer, a laptop, or the like. Such apparatuses usually require thin and light design and may use lithium-ion batteries as power sources.

### Example 1

A lithium-ion battery cell was prepared according to the following steps.

### (1) Preparation of positive electrode plate

Lithium iron phosphate as a positive electrode active material, lithium nickelate as a positive electrode lithium supplementation agent, superconducting carbon black SP as a conductive agent, and polyvinylidene fluoride (PVDF) as a binder were dispersed in N-methylpyrrolidone (NMP) as a solvent in a mass ratio of 93:3:2:2 and mixed well to obtain a positive electrode slurry. The positive electrode slurry was uniformly applied to an aluminum foil as the positive electrode current collector, and after drying, cold pressing, slitting, and cutting, a positive electrode plate was obtained.

### (2) Preparation of negative electrode plate

Graphite as a negative electrode active material, superconducting carbon black SP as a conductive agent, SBR as a binder, and CMC-Na as a thickener were dispersed in deionized water as a solvent in a mass ratio of 96:1:1:2 and mixed well to obtain a negative electrode slurry. The negative electrode slurry was uniformly applied to a copper foil as a negative electrode current collector. After drying, cold pressing, slitting, and cutting, a negative electrode plate was obtained.

### (3) Separator

A polyethylene film was used as a separator.

### (4) Preparation of electrolyte

Ethylene carbonate, dimethyl carbonate, and ethyl methyl carbonate were mixed well in a ratio of 3:4:3 to obtain a first solvent. The first solvent was mixed well with an ether compound ethylene glycol dimethyl ether to prepare an organic solvent. In the organic solvent, a mass percentage of the ether compound ethylene glycol dimethyl ether was 20%.

Lithium hexafluorophosphate as a lithium salt and 1,3-propane sultone as a sulfur-containing compound were added to the above organic solvent and mixed well to prepare an electrolyte. In the electrolyte, a concentration of lithium hexafluorophosphate was 1.3 mol/L, and a mass percentage of 1,3-propane sultone was 2.5%.

### (5) Preparation of lithium-ion battery

The above positive electrode plate, separator, and negative electrode plate were stacked in sequence, with the separator positioned between the positive electrode plate and the negative electrode plate to provide isolation, and then stacked to obtain a jelly roll; and the jelly roll was placed in an outer package shell, dried, and injected with electrolyte, and after vacuum packaging, a lithium-ion battery cell was obtained.

The following performance of the lithium-ion battery cell is tested.

### (1) Initial gram capacity utilization

A LADN testing system was used to perform charge-discharge testing on the battery.

At 25°C, with the battery charge-discharge voltage range maintained at 2.5 V to 3.65 V, cycling was performed at 0.5C charge and 0.2C discharge current density, the discharge capacity at the third cycle of the battery was recorded, and the ratio of the discharge capacity to the mass of active substance in the positive electrode plate was calculated; this ratio was the initial gram capacity utilization (it should be noted that the first cycle of the battery was the formation stage, and the third cycle was more stable than the second cycle, so the third cycle was selected as the actual first cycle).

The initial gram capacity utilization of the lithium-ion battery cell of Example 1 was 153 mAh/g.

### (2) Lithium ion conductivity of electrolyte

The AC impedance method was used to monitor the ion conductivity of the electrolyte (platinum black electrode). Two metal electrodes (Pb) were placed parallel and perpendicular in the electrolyte cell and connected to the measurement circuit. The AC impedance spectrum of the sample was measured on an electrochemical comprehensive tester with experimental conditions set as frequency 1 Hz to 100000 Hz. From the intersection of the tail line and the real axis in the AC impedance spectrum, the electrolyte resistance was read, and the conductivity of the electrolyte was calculated.

The ion conductivity of the electrolyte in the lithium-ion battery of Example 1 was 16.3 mS/cm.

### (3) Capacity retention rate (500 cycles)

A LADN testing system was used to perform charge-discharge testing on the battery.

At 25°C, with the battery charge-discharge voltage range maintained at 2.5 V to 3.65 V, cycling was performed at 0.5C charge and 0.5C discharge current density, the discharge capacity at the third cycle of the battery was recorded as the initial capacity C0, and after 500 cycles, another capacity was recorded as capacity C500; the ratio of C500 to C0 was the retention rate for the current cycle (it should be noted that the first cycle of the battery was the formation stage, and the third cycle was more stable than the second cycle, so the third cycle was selected as the actual first cycle).

The capacity retention rate (500 cycles) of the lithium-ion battery of Example 1 was 94.5%.

### (4) 100-cycle high-rate 10C retention rate (high-rate performance)

A LADN testing system was used to perform charge-discharge testing on the battery.

At 25°C, with the battery charge-discharge voltage range maintained at 2.5 V to 3.65 V, cycling was performed at 0.5C charge and 10C discharge current density, the discharge capacity at the third cycle of the battery was recorded as the initial capacity C0, and after 100 cycles, another capacity was recorded as capacity C100; the ratio of C100 to C0 was the retention rate for the current cycle (it should be noted that the first cycle of the battery was the formation stage, and the third cycle was more stable than the second cycle, so the third cycle was selected as the actual first cycle).

The capacity retention rate (100 cycles) of the lithium-ion battery of Example 1 under high-rate (10C) cycling conditions was 84.6%.

### Examples 2-10

The concentration of the lithium salt, and the use amounts of sulfur-containing compound and ether compound were changed to those shown in Table 1, and lithium-ion batteries were prepared under the same conditions as in Example 1 and tested according to the methods in Example 1.

**Table 1**

| | Concentration of lithium salt in electrolyte (mol/L) | Mass percentage of sulfur-containing compound in electrolyte | Mass percentage of ether compound in organic solvent | Initial gram capacity utilization (mAh/g) | Ion conductivity (mS/cm) | 500-cycle capacity retention rate | 100-cycle high-rate 10C retention rate |
|---|---|---|---|---|---|---|---|
| Example 1 | 1.3 | 2.5% | 20% | 153 | 16.3 | 94.5% | 84.6% |
| Example 2 | 1.3 | 2.5% | 15% | 151.8 | 15.6 | 93.2% | 84.5% |
| Example 3 | 1.3 | 2.5% | 25% | 153.2 | 16.8 | 92.8% | 83.9% |
| Example 4 | 1.3 | 2.5% | 30% | 153.5 | 17 | 90.2% | 83.5% |
| Example 5 | 1.3 | 1.5% | 20% | 149.5 | 16.6 | 93.4% | 83.9% |
| Example 6 | 1.3 | 2.0% | 20% | 150.4 | 16.7 | 93.9% | 84.2% |
| Example 7 | 1.3 | 3.5% | 20% | 148 | 17.4 | 94.1% | 83.5% |
| Example 8 | 1 | 2.5% | 20% | 148.9 | 12.5 | 88.2% | 83.1% |
| Example 9 | 1.2 | 2.5% | 20% | 150.6 | 14.6 | 92.3% | 83.6% |
| Example 10 | 1.4 | 2.5% | 20% | 152.7 | 16.2 | 93.6% | 85.0% |

### Examples 11-16

The use amounts of lithium salt, sulfur-containing compound, and ether compound were changed to those shown in Table 2, and lithium-ion batteries were prepared under the same conditions as in Example 1 and tested according to the methods in Example 1.

**Table 2**

| | Concentration of lithium salt in electrolyte (mol/L) | Mass percentage of sulfur-containing compound in electrolyte | Mass percentage of ether compound in organic solvent | Initial gram capacity utilization (mAh/g) | Ion conductivity (mS/cm) | 500-cycle capacity retention rate | 100-cycle high-rate 10C retention rate |
|---|---|---|---|---|---|---|---|
| Example 11 | 1.3 | 2.5% | 10% | 151.5 | 15.4 | 94.0% | 83.3% |
| Example 12 | 1.3 | 2.5% | 50% | 152.8 | 18.3 | 88.0% | 82.6% |
| Example 13 | 0.9 | 2.5% | 20% | 147.6 | 12.2 | 87.5% | 82.5% |
| Example 14 | 1.6 | 2.5% | 20% | 147.8 | 13.5 | 86.3% | 82.6% |
| Example 15 | 1.3 | 0.5% | 20% | 148.7 | 15.9 | 92.5% | 83.5% |
| Example 16 | 1.3 | 4% | 20% | 153.2 | 15.8 | 96.5% | 83.7% |

By comparing the test results of the above examples, it can be seen that compared with Examples 11-16, Examples 1-10 achieve further improvement in capacity retention rate (capacity retention rate especially under high-rate cycling conditions) of the battery by simultaneously optimizing and adjusting the use amounts of lithium salt, sulfur-containing compound, and ether compound.

### Examples 17 and 18

The material of the positive electrode lithium supplementation agent was changed to those shown in Table 3, and lithium-ion batteries were prepared under the same conditions as in Example 1 and tested according to the methods in Example 1.

**Table 3**

| | Positive electrode lithium supplementation agent | Initial gram capacity utilization (mAh/g) | Ion conductivity (mS/cm) | 500-cycle capacity retention rate | 100-cycle high-rate 10C retention rate |
|---|---|---|---|---|---|
| Example 1 | Lithium nickelate | 153 | 16.3 | 94.5% | 84.6% |
| Example 17 | Li(Ni_{0.8}Co_{0.1}Mn_{0.1})_{1.3}O₂ | 160.2 | 16.1 | 89.1% | 80.0% |
| Example 18 | Lithium manganate | 118 | 15.8 | 87.6% | 81.5% |

### Examples 19 and 20

The sulfur-containing compound was changed to those shown in Table 4, and lithium-ion batteries were prepared under the same conditions as in Example 1 and tested according to the methods in Example 1.

**Table 4**

| | Sulfur-containing compound | Initial gram capacity utilization (mAh/g) | Ion conductivity (mS/cm) | 500-cycle capacity retention rate | 100-cycle high-rate 10C retention rate |
|---|---|---|---|---|---|
| Example 1 | 1,3-propane sultone | 153 | 16.3 | 94.5% | 84.6% |
| Example 19 | 1,4-butane sultone | 152.5 | 15.7 | 94.3% | 84% |
| Example 20 | Propenyl-1,3-sultone | 152 | 16.0 | 94.1% | 83.9% |

When different types of sulfonates are used as the sulfur-containing compound, the ion conductivity of the electrolyte can be improved, and the lithium-ion battery has good initial gram capacity utilization and capacity retention rate.

### Examples 21-23

The ether compound was changed to those shown in Table 5, and lithium-ion batteries were prepared under the same conditions as in Example 1 and tested according to the methods in Example 1.

**Table 5**

| | Ether compound | Initial gram capacity utilization (mAh/g) | Ion conductivity (mS/cm) | 500-cycle capacity retention rate | 100-cycle high-rate 10C retention rate |
|---|---|---|---|---|---|
| Example 1 | Ethylene glycol dimethyl ether | 153 | 16.3 | 94.5% | 84.6% |
| Example 21 | Diethylene glycol dimethyl ether | 152.4 | 16 | 93.9% | 84% |
| Example 22 | 1,3-dioxolane (DOL) | 151.2 | 14 | 92.6% | 83.5% |
| Example 23 | Tetrahydrofuran | 151 | 13.7 | 92.4% | 83% |

Examples 1 and 21 with the use of chain ether compounds show further improvement in initial gram capacity and capacity retention rate of the battery compared with Examples 22 and 23 with the use of cyclic ether compounds.

### Comparative Examples 1-4

The concentration of the lithium salt, and the use amounts of sulfur-containing compound and ether compound were changed to those shown in Table 6, and lithium-ion batteries were prepared under the same conditions as in Example 1 and tested according to the methods in Example 1.

**Table 6**

| | Concentratio n of lithium salt in electrolyte (mol/L) | Mass percentage of sulfur-containing compound in electrolyte | Mass percentage of ether compound in organic solvent | Initial gram capacity utilization (mAh/g) | Ion conductivity (mS/cm) | 500-cycle capacity retention rate | 100-cycle high-rate 10C retention rate |
|---|---|---|---|---|---|---|---|
| Example 1 | 1.3 | 2.5% | 20% | 153 | 16.3 | 94.5% | 84.6% |
| Comparative Example 1 | 1.3 | - | 20% | 149.5 | 13.5 | 90.5% | 80.6% |
| Comparative Example 2 | 1.3 | 2.5% | - | 148.5 | 13.3 | 89.6% | 78.3% |
| Comparative Example 3 | 1.5 | - | 20% | 146.2 | 12 | 87.4% | 77.5% |
| Comparative Example 4 | 1.5 | 2.5% | - | 146 | 11.2 | 87.1% | 76.0% |

- indicates that the value is absent because the corresponding component is not contained.

By comparing the test results of Example 1 and Comparative Examples 1 and 2, it can be seen that if either the sulfur-containing compound or the ether compound is absent, the performance of the lithium-ion battery deteriorates significantly. This application achieves a synergistic effect by simultaneously applying a sulfur-containing compound and an ether compound in the electrolyte of a lithium-ion battery having a positive electrode lithium supplementation agent, which significantly improves the initial gram capacity and capacity retention rate of the battery. By comparing the test results of Example 1 and Comparative Examples 3 and 4, it can be seen that when either the sulfur-containing compound or the ether compound is absent, even adjusting the concentration of the lithium salt in the electrolyte can hardly improve the initial gram capacity utilization and capacity retention rate of the battery.

The above descriptions are merely preferred specific embodiments of this application, but the protection scope of this application is not limited thereto. Any changes or substitutions that can be easily conceived by those skilled in the art within the technical scope disclosed in this application should be covered within the protection scope of this application. Therefore, the protection scope of this application shall be subject to the protection scope of the claims.

## Claims

1. A lithium-ion battery, comprising a positive electrode plate and an electrolyte;
**characterized in that**,
the positive electrode plate comprises a positive electrode current collector and a positive electrode active material layer provided on at least one surface of the positive electrode current collector, the positive electrode active material layer comprising a positive electrode lithium supplementation agent; and
the electrolyte comprises a non-aqueous solvent and an additive; the non-aqueous solvent comprises an ether compound, and the additive comprises a sulfur-containing compound; and in the non-aqueous solvent, a mass percentage of the ether compound is 15% to 30%.

2. The lithium-ion battery according to claim 1, **characterized in that** the ether compound comprises a chain ether compound.

3. The lithium-ion battery according to claim 2, **characterized in that** the chain ether compound comprises at least one of the following group consisting of: ethylene glycol dimethyl ether, ethylene glycol diethyl ether, diethylene glycol dimethyl ether, triethylene glycol dimethyl ether, tetraethylene glycol dimethyl ether, dipropyl ether, and dibutyl ether.

4. The lithium-ion battery according to any one of claims 1 to 3, **characterized in that**, in the non-aqueous solvent, the mass percentage of the ether compound is 15% to 25%.

5. The lithium-ion battery according to any one of claims 1 to 4, **characterized in that** the sulfur-containing compound comprises a sulfonate compound.

6. The lithium-ion battery according to claim 5, **characterized in that** the sulfonate compound comprises at least one of the following group consisting of: 1,3-propane sultone, 1,3-propene sultone, 1,4-butane sultone, and methylene methane disulfonate.

7. The lithium-ion battery according to any one of claims 1 to 6, **characterized in that**, in the electrolyte, a mass percentage of the sulfur-containing compound is 0.5% to 4%.

8. The lithium-ion battery according to claim 7, **characterized in that**, in the electrolyte, the mass percentage of the sulfur-containing compound is 1.5% to 3.5%.

9. The lithium-ion battery according to any one of claims 1 to 8, **characterized in that** the electrolyte further comprises a lithium salt dissolved in the non-aqueous solvent; and in the electrolyte, a concentration of the lithium salt is 0.5 mol/L to 1.6 mol/L.

10. The lithium-ion battery according to claim 9, **characterized in that**, in the electrolyte, the concentration of the lithium salt is 1 mol/L to 1.4 mol/L.

11. The lithium-ion battery according to any one of claims 1 to 10, **characterized in that** the positive electrode lithium supplementation agent comprises at least one compound conforming to the following formula: LiₓM_{y}O_{z}, wherein M is one or more elements selected from Fe, Ni, Mn, Cu, Zn, Co, Cr, Zr, Ni, Sb, Ti, V, Mo, and Sn, 1≤x≤8, 0<y, and 0<z<13.

12. The lithium-ion battery according to any one of claims 1 to 10, **characterized in that** the positive electrode lithium supplementation agent comprises at least one of the following group consisting of: Li₅FeO₄, Li₅Fe₅O₈, Li₆CoO₄, Li₂NiO₂, Li₂O, Li₂O₂, Li₆MnO₄, Li₆ZnO₄, Li₂CuO₂, Li₂CoO₂, Li₂MnO₂, Li₂C₂O₄, Li₂Ni_{0.5}Mn_{1.5}O₄, and Li(Ni_{0.8}Co_{0.1}Mn_{0.1})_{1.3}O₂.

13. An electric apparatus, **characterized by** comprising the lithium-ion battery according to any one of claims 1 to 12.
